# EUROPEAN PATENT APPLICATION

(11) **EP 4 657 800 A1**
(43) Date of publication of application: **03.12.2025**
(21) Application number: 25179709.8
(22) Date of filing: 29.05.2025
(51) Int. Cl.: H04L 9/40, H04W 12/63

(54) **METHOD TO MONITOR AND DETECT NETWORK ANOMALIES IN BUILDING MANAGEMENT SYSTEMS AND PROVIDE A RESPONSIVE DEFENSE**

(30) Priority: 29.05.2024 US 202418677486
(71) Applicant: Trane International Inc., Davidson, NC 28036 (US)
(72) Inventor: DAYALAN, Udhaya Kumar, Davidson, North Carolina, 28036 (US); SIVAGNANAM, Mangayarkarasi, Davidson, North Carolina, 28036 (US); MEYERS, Brian, Davidson, North Carolina, 28036 (US)
(74) Representative: Haseltine Lake Kempner LLP

(57) **Abstract**

A network monitor or method provide network security specific to equipment of a building automation system (BAS) and server assessment of network communication directed thereto. A server couples to a building management network of the building automation system. The server monitors communication that is on the building management network, and determines whether such communication is directed to specific devices of the building automation system. The server determines a security assessment, a security-centric assessment, and/or a geo-location-based server assessment of a server that originated the incoming communication directed to specific device(s) of the building automation system.

## Description

### TECHNICAL FIELD

The present disclosure relates generally to network security and building automation systems or building management systems.

### BACKGROUND

Building automation systems (BAS), also known as building management systems (BMS), are in widespread use, and may have various pieces of equipment (e.g., devices) coupled to a building management network. Owners or operators of building automation systems may have concerns about bad actors (e.g., hostiles, hackers, attackers, etc.), and employ commonly available network security. Yet, commonly available network security may not optimally protect a building automation system from bad actors. There is an ongoing need for technological improvements in network security and building automation systems, and it is in this environment that present embodiments arise.

### SUMMARY

The present disclosure includes, without limitation, the following examples.

One embodiment is a network monitor to provide network security specific to equipment of a building automation system (BAS) and server assessment of network communication directed thereto. The network monitor includes a server having multiple aspects. One aspect is the server is configured to couple to a building management network of the building automation system. One aspect is the server is configured to monitor communication that is on the building management network and determine whether such communication is directed to specific devices of the building automation system. And, one aspect is the server is configured to determine and perform at least one of store or communicate, for each of a plurality of incoming network traffic communications that is determined directed to one or more specific devices of the building automation system, a geo-location-based assessment of a server that originated said each of the plurality of incoming network traffic communications directed to the one or more specific devices of the building automation system.

One embodiment is a network monitor to provide network security specific to equipment of a building automation system (BAS) and server assessment of network communication directed thereto. The network monitor includes a server configured to couple to a building management network of the building automation system. The server is configured to monitor communication that is on the building management network and determine whether such communication is directed to specific devices of the building automation system. The server is configured to determine and store or communicate, for each of a plurality of incoming network traffic communications that is determined directed to one or more specific devices of the building automation system, a security assessment of a server that originated said each of the plurality of incoming network traffic communications directed to the one or more specific devices of the building automation system.

One embodiment is a processor-based method to provide network security specific to equipment of a building automation system (BAS) and server assessment of network communication directed thereto. The method includes coupling a server to a building management network of the building automation system. The method includes monitoring, by the server, communication that is on the building management network. The method includes determining, by the server, whether such communication is directed to specific devices of the building automation system. And, the method includes determining and performing at least one of store or communicate, for each of a plurality of incoming network traffic communications that is determined directed to one or more specific devices of the building automation system, a security-centric assessment of a server that originated said each of a plurality of incoming network traffic communications directed to the one or more specific devices of the building automation system.

These and other features, aspects, and advantages of the disclosure will be apparent from a reading of the following detailed description together with the accompanying drawings, which are briefly described below. The disclosure includes any combination of two, three, four, or more of the above-noted embodiments, examples, or implementations as well as combinations of any two, three, four, or more features or elements set forth in this disclosure, regardless of whether such features or elements are expressly combined in a specific example description herein. This disclosure is intended to be read holistically such that any separable features or elements of the disclosed disclosure, in any of its various aspects, embodiments, examples, or implementations, should be viewed as intended to be combinable unless the context clearly dictates otherwise.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
Fig. 1 illustrates an example embodiment of a network monitor that provides network security specific to equipment of a building automation system (BAS).
Fig. 2 illustrates an example embodiment of geo-location-based characterization and proximity analysis of an origin server that originated a communication directed to a specific device of the building automation system, as may be performed by embodiments of the network monitor of Fig. 1 and variations thereof.
Fig. 3 illustrates an example embodiment of security assessment of an origin server that originated a communication directed to a specific device of the building automation system, as may be performed by embodiments of the network monitor of Fig. 1 and variations thereof.
Fig. 4 illustrates a flow diagram, as an example embodiment of a method to provide network security specific to equipment of a building automation system and server assessment of network communication directed to such equipment.
Fig. 5 illustrates a flow diagram, as a further example use embodiment of a method to provide network security specific to equipment of a building automation system and server assessment of network communication directed to such equipment.
Fig. 6 illustrates control circuitry, according to some example implementations of the present disclosure.

### DETAILED DESCRIPTION

Various embodiments of a system and method for network monitoring that provide network security specific to equipment of a building automation system (BAS) are described herein. Technologically improving upon general purpose network security, and improving upon standard building automation systems, present embodiments such as a server, a network monitor and a processor-based method may be focused on specific devices of a building automation system, and network security directed specifically thereto.

Some embodiments monitor and detect network anomalies in the building management systems and provide a responsive defense. In some embodiments, controllers enhance the network monitor that may be integrated on servers in the building management network, e.g., through LDAP (Lightweight Directory Access Protocol), AD, SMTP (Simple Mail Transfer Protocol), NTP (Network Time Protocol), Ensemble, etc. The server may monitor the server configuration and network traffic for any misconfigurations and anomalies to protect the controller(s) and building management network from application-specific attacks. Some embodiments provide protection against network protocol Layer 7 attacks that might otherwise lead to controllers being taken over by attackers, loss of data, connectivity, and downtime. Embodiments may monitor for unauthorized and unauthenticated network players.

Building Automation System (BAS) could be an easy entry point to the network for bad actors and attacks, e.g., considering the BACnet protocol. Some present embodiments function to counteract the network-based attack vector on the BAS network for any malicious activity, which could intentionally or unintentionally cause network flooding, DoS (Denial of Service), or traffic overload that could potentially cause damage to the BAS controllers or BAS enterprise servers and temporary or permanently interrupt services. The continuous monitoring of the incoming network traffic for anomalies enables various embodiments to monitor the risk and provide a responsive defense to prevent damages.

Various features listed below may be present in various combinations in various embodiments:
Monitor Network Anomalies
   Inbound (Client) Connection
   Inbound (Servers) Connection
Geo-Location Monitor
   HTTP Request (Client connection)
   Server's Geo-Location Monitor
Network Governance
   Controller Identify Verification in the network
   Controller Authentication & Authorization
   Log/Alert
   PNAC (port-based network access control)
External Server Assessments
   Monitor External Server Anomalies, e.g. using NTP, LDAP, SMTP, ES
   (Enterprise System), TIS (Trusted Information Systems), etc.
   Whitelist / Blacklist Server (IP address)
   Server Signature/ Certificate Based Verification
   Identify and restrict servers that respond with malicious traffic

In some embodiments, various aspects of Network Governance apply and can be performed by the system. In some embodiments, the services can help identify, contain and potentially remediate security threats in the BAS network. The services may be implicit and open-ended, adapting to environmental contingencies and coordinating and safeguarding the network. Network Governance may focus on HVAC specific components and/or other specific components in the BAS network. In some embodiments, Network Governance can perform one or more of the following:
Authenticate only authorized devices' network access to operate and communicate in the network (e.g., Device ID restriction, MAC address restriction, Certificate, etc.)
Govern and regulate the device's network communication to specific ports and protocols on authorized devices.
Block access to a network by denying communication between an unauthorized device and the network.
Monitor and control the connectivity of devices /networks with external networks (e.g., perimeter defense, firewall, ACL (asynchronous connectionoriented link, logical transport, Bluetooth), etc.
Provide real-time analysis of security alerts generated by devices and networks to contain and remediate security threats.

In some embodiments, based on the findings from the above network governance - the application provides the real-time analysis of security alerts - and notifies as appropriate (e.g., based on the severity of the findings), and may help resolve and remediate findings.

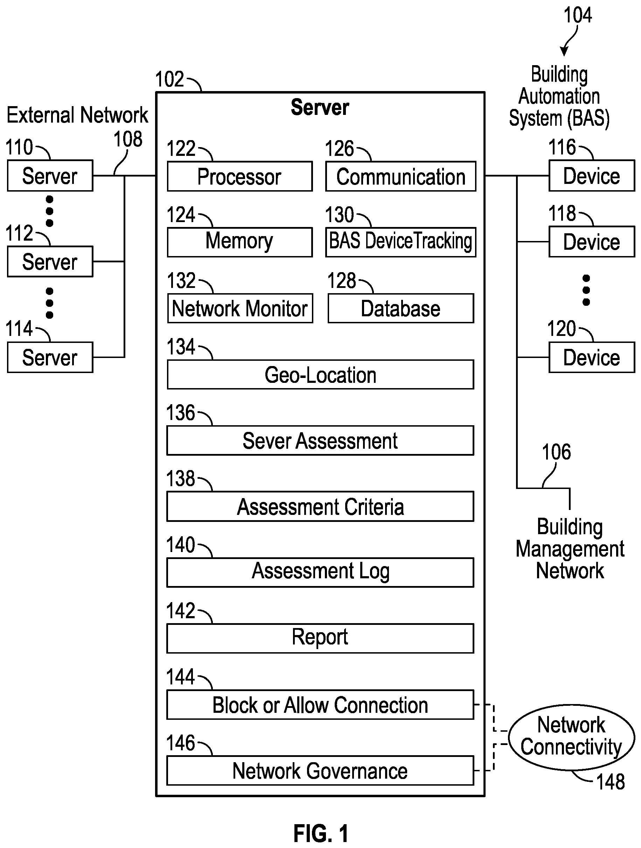

Fig. 1 illustrates an embodiment of a network monitor that provides network security specific to equipment of a building automation system (BAS). In some embodiments, the network monitor is implemented by a server 102, for example with software executing on the server 102 through a processor 122 and memory 124. There may be a database 128, e.g., used for storage and association of various data and metadata, which may be implemented in memory 124 in the server 102, or in further embodiments may be coupled to the server 102, e.g., distributed processing, virtual computing, virtual storage, distributed storage, cloud storage, etc. The server 102 may have various modules, which may be implemented in software executing on a processor, firmware and/or hardware, and can include a communication module 126 that couples the server 102 to an external network 108 and to the building management network 106 of the building automation system 104 for communication in these networks 106, 108 and with servers 110, 112, 114 on the external network 108 and devices 116, 118, 120 on the building management network 106. In some embodiments, modules include a BAS device tracking module 130, which tracks devices 116, 118, 120 of the building automation system 104, for example HVAC (heating, ventilation, air conditioning) systems, building security system(s), electrical system equipment, lighting equipment, utilities equipment, elevators equipment, and/or further equipment of a building that is coupled to the building management network 106. In some embodiments, the BAS device tracking module 130 tracks services, such as BACnet, web services, TCP/IP. In some embodiments, the BAS device tracking module 130 tracks basic device information, such as device ID, IP address, device name, etc. Server 102 modules may further include a geo-location module, which can determine geo-location of a server 110 on the external network 108, particularly a server that originates a communication destined to the server 102 or one of the devices 116, 118, 120 of the building automation system 104, which are coupled to the building management network 106. In some embodiments, there is a server assessment module 136 that performs an assessment of a server, for example one or more of the servers 110, 112, 114 coupled to the external network 108. It is understood there may be a great many servers coupled to the external network, which may include or be coupled to the global connection network known as the Internet, and that the embodiments described herein may be selective as to which such servers are assessed. In some embodiments, such a process can use assessment criteria 138, in performance of a server assessment 136, can use an assessment log 140 to record results of server assessment 136, and/or can use a report module 142, e.g., to compose and/or issue reports, which can include information and/or alerts. One of the functions of the server 102 may be to control network connection to devices 116, 118, 120, through a block or allow connection module 144. This and further operations may be a function of or directed by a network governance module 146. Network connectivity 148 may be a function or functionality of the network governance module 146 and/or the block or allow connection module 144.

In various operating scenarios, to function as a network monitor, the server 102 tracks building automation system 104 devices 116, 118, 120 and monitors communication that may be from or to one or more of the servers 110, 112, 114 and to or from one of the devices 116, 118, 120, which may be mixed in with further communication on the external network 108, and/or the building management network 106. That is, the network monitor has the capability of sorting out communications, and selecting which communications to monitor, and which servers to assess, according to origins and destinations. Particularly, the network monitor, e.g., server 102, may monitor incoming communication on the external network 108 that the network monitor identifies as destined to one or more of the devices 116, 118, 120 coupled to the building management network 106, and perform a security-centric assessment, or security assessment, of a server(s) that originates incoming communication directed to such device(s) 116, 118, 120, with follow-up action such as storing or communicating server assessment(s), blocking or allowing connection based on server assessment, network governance, etc., using appropriate modules for communication, server assessment, network governance, etc. In some scenarios and embodiments, the server 102 determines geo-location of such server(s) that may have originated incoming communication directed to specific device(s) 116, 118, 120 of the building automation system 104, and uses that information to perform geo-location-based server assessment of such server(s).

In various combinations of the above features and in various embodiments, the network monitor may provide network security specific to equipment of the building automation system, and may provide server assessment of network communication directed to equipment of the building automation system. Such server assessment may be geo-location-based, security centric and/or a security assessment. In some examples other modules, functions, criteria discussed above or readily devised may also be used.

In some embodiments, network governance may include monitoring network traffic to recognize communication specific to protocol(s) of the specific device(s) 116, 118, 120 of the building automation system 104, protocol(s) specific to the building management network 106, and/or protocol(s) specific to the building automation system 104. In addition to the network traffic monitoring, the network governance may authenticate only authorized devices' network access to operate and communicate in the network (e.g., Device ID restriction, MAC address restriction, Certificate, etc. Decisions for server assessment, blocking or allowing connection and/or further network governance may be based thereupon, in various embodiments.

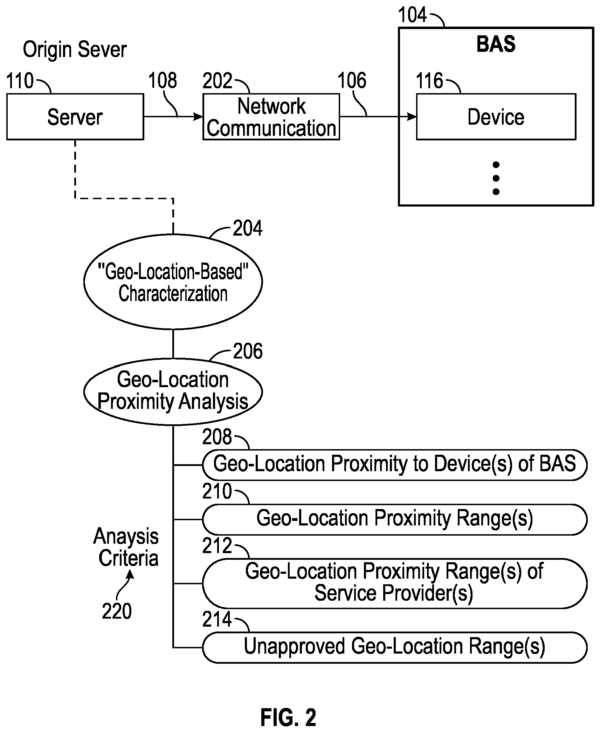

Fig. 2 illustrates an embodiment of geo-location-based characterization 204 and proximity analysis of an origin server 110 that originated a communication 202 directed to a specific device 116 of the building automation system 104, as may be performed by embodiments of the network monitor of Fig. 1 and variations thereof. In one example operating scenario, the server 102 (see Fig. 1) is monitoring network communications 202 on the external network 108, notices a network communication 202 is arriving at the building automation system 104 destined for one of the devices 116 that is being tracked by the BAS device tracking module 130, determines which specific server 110 originated that specific network communication 202, destined to that specific device 116, and determines a geo-location-based characterization 204 of that origin server 110. For example, in some embodiments, the server 102 looks at IP origin addresses and IP destination addresses of network communication 202 and analyzes these as to geo-location. In addition to IP-based location tracking, the server 102 may also determine geo-location via Global Positioning System (GPS) in some of the connectivity modules on the devices (e.g., Wireless, CellModem, etc.) In some embodiments, the geo-location-based characterization 204 includes geo-location proximity analysis 206, such functions being performed through the geo-location module 134 of the server 102 and the server-assessment module 136 of the server 102. In various embodiments, geo-location proximity analysis 206, as a function, includes various analysis criteria 220. For example, the network monitor could determine geo-location proximity to device(s) of the BAS as a function using appropriate criteria 208. In some embodiments, this is used to determine how near or how far away the origin server 110 is relative to the device 116, or other piece of equipment in the building automation system or the entirety thereof. In some embodiments, a security assessment then further analyzes, reports, and/or allows or disallows connection to a device 116, etc., depending on whether the origin server 110 is determined to be close enough or too far away from the BAS 104 and equipment therein, protecting against remote attacks. Alternatively, this could be used to determine whether the origin server 110 is within an approved geo-location range of a service provider, for comparison to approved geo-location proximity range(s) criteria 220, comparison to approved geo-location range(s) of service provider(s) criteria 212. In some embodiments, the security assessment performs actions such as above, depending on whether or not the origin server 110 is determined to be located within a range appropriate to a service provider, again protecting against remote attacks. Further, in some embodiments, this is used to determine whether the origin server 110 is within an unapproved geo-location range(s), for example specified geographic locations (e.g., geo-location ranges) that are not trusted or may have a history of greater likelihood of attacks. This again protects against remote attacks. Further analysis criteria 220 suitable for geo-location-based characterization 204 and/or geo-location proximity analysis 206 may be developed in keeping with the teachings herein. Further geo-location-based characterization 204 may be developed in keeping with the teachings herein. In some examples, one or more of these criteria 220 are used as part of the security assessment, e.g., only services located within a certain proximity of the BAS and near a service provider are allowed. Alternatively, services within unapproved geo-location are not allowed unless the service location at a (or near) a given service providers location. Other combination may also be utilized.

For example, there may be regional location proximity instead of distance. As a more specific example scenario, if devices are located in San Francisco, the system could allow the California region and/or nearby states on the West Coast depending on a site policy or customer, system and/or configuration (s). As a further example, in the case of an unapproved location, devices equipped in the San Francisco location could specify that the San Francisco region is an approved location and Russia or other regions could be unapproved locations. Suitable analysis criteria 220 are readily developed for these example considerations or further considerations as applicable to a specific site location, site policy, customer, system or configuration, and geo-location-based characterization 204 and/or geo-location proximity analysis 206.

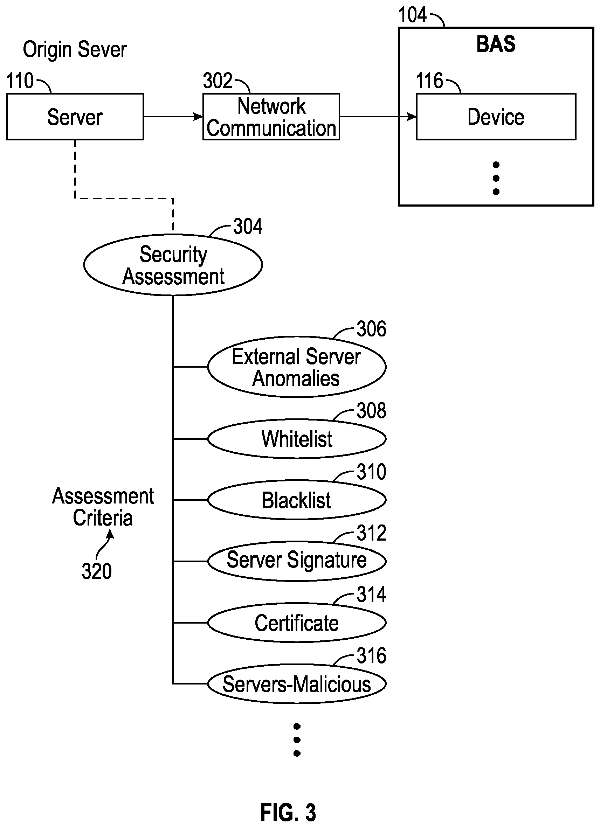

Fig. 3 illustrates an embodiment of security assessment 304 of an origin server 110 that originated a communication 302 directed to a specific device 116 of the building automation system 104, as may be performed by embodiments of the network monitor of Fig. 1 and variations thereof. Operation, features, functionality, capability, etc. are related to embodiments described with reference to Fig. 2, here the security assessment 304 is not limited to geo-location-based characterization or geo-location proximity analysis 206, and uses assessment criteria 320. In some embodiments, the network monitor determines a security assessment 304 of an origin server 110 using external server anomalies criteria 306, e.g., looking to see if the origin server 110 (which is considered an external server because external to the BAS 104 and building management network 106) is exhibiting a server anomaly according to external server anomalies criteria 306. Such analysis can be done, for example, through parsing data and/or metadata of a specific network communication 302, which analysis may be useful in various embodiments. Alternatively, in some embodiments, the network monitor determines a security assessment 304 of an origin server 110 using a whitelist 308, blacklist 310, checking server signature 312, verification of a certificate 314, or assessing relative to known servers that exhibit malicious behavior, using servers-malicious criteria 316 (e.g., a list of known malicious servers). For example, blacklist(s), whitelist(s), information about servers including origin servers, network monitoring, geo-location determination, analysis, security assessment, and various criteria directed thereto, and network governance and further features of embodiments could include server IP addresses as determined through monitoring of network communication, for example by extracting IP addresses from network packets and/or obtaining IP addresses from external or internal resources through means known in the art, e.g., subscription to security services, or developed in pursuit of assessment criteria 320 in keeping with the teachings herein. Further forms of network monitoring, geo-location determination, and criteria directed thereto, which can be network-protocol based, may be available or developed in keeping with the teachings herein. Further forms of security assessment and server assessment, and criteria directed thereto, may be available or developed in keeping with the teachings herein.

With reference to Figs. 1, 2 and 3, various specific criteria, parameters, actions, etc. could be used for assessment criteria 138, server assessment 136, assessment log 140, report module 142 (Fig. 1), geo-location-based characterization 204 (Fig. 2), or security assessment 304 (Fig. 3). In some embodiments, the server monitors and determines a relationship to malicious traffic and servers that are identified as responding with malicious traffic, and performs network governance, for example identifying DOS (denial of service), brute-force, escalation of privilege and other security attacks. In some embodiments, the server monitors and determines there is a device that is both authorized to operate and communicate in the network, and/or a device that is to be granted network access, for example by authorizing by credentials, identity provisioning or network certificates. In some embodiments, the server monitors and determines to regulate network communication to specific ports and/or protocols on authorized devices, for example by validating ports and protocols based on approved services, such as specific ports for BACnet, Web services, SMTP and other services. In some embodiments, the server monitors and determines to block access by blocking un-authorized traffic or network packets, blocking blacklisted clients or requests from blacklisted clients. In some embodiments, the server monitors and controls connectivity, for example through specific configurable ports for BACnet-47809, or for Webservices, SMTP and other services. In some embodiments, alerts are sent from the BAS devices/controllers. Some of the assessments in some embodiments are performed on the BAS controller level and some on BAS server/cloud.

The above and various further features, processes, actions and capabilities as readily developed are presented below in flow diagrams embodying methods that may be performed by the network monitor in various embodiments. These and further related methods may be embodied in tangible media having instructions for execution by a processor (e.g., a processor of a server).

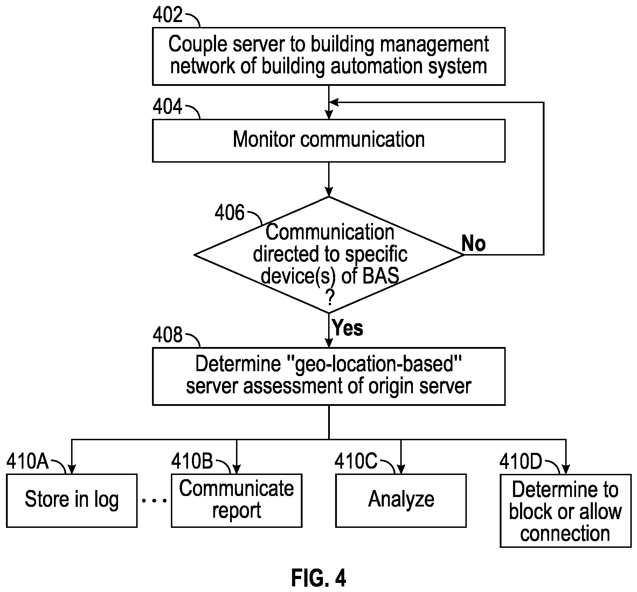

Fig. 4 illustrates a flow diagram of some embodiments of a method to provide network security specific to equipment of a building automation system and server assessment of network communication directed to such equipment.

In an action 402 the server is coupled to the building management network of the building automation system. Referencing Fig. 1, this could be done through a communication module 126. It is understood the server 102 may also be coupled to an external network, and has the capability of doing so.

In an action 404, the server monitors communication. For example, the server may monitor network communication and be looking for communication origins and destinations, e.g., IP addresses. For further example, the server may be determining the status of the devices, legitimacy of the device and its traffic, Network traffic monitoring, monitoring for anomalies, network performance and security (slow response time vs. failing response),

In a determination action 406, it is determined whether a communication, being monitored, is directed to a specific device(s) of the BAS. This may be part of how the network monitor provides network security specific to equipment of a building automation system. For example, the system may monitor destinations or destination IP addresses in communications, or contents of communications, and may look for a match to IP addresses or other tracked information identifying specific device(s) of the BAS, or specific protocol(s) of devices or network of the BAS. If the determination is no, flow branches back to the action 402, to continue monitoring communication. If the determination is yes, flow proceeds to the action 408, in which the server determines geo-location-based server assessment of the origin server. This may be part of how the network monitor provides network security.

One or more actions 410A, 410B, 410C, 410D may then be performed, in parallel or series, etc., based on or in response to, or as part of, the geo-location-based server assessment. Further actions in keeping with the teachings herein are readily devised. In the action 410A, result(s) of determining geo-location-based server assessment of the origin server are stored in a log, for example the assessment log 140 (see Fig. 1), or perhaps other storage in memory 124 or database 128, which may be local or remote.

In the action 410B the report is communicated. For example, the server could form a report, with results of geo-location-based server assessment of origin server(s), which may include an alert, statistics, report of specific incident(s), etc.

In the action 410C, the present server, e.g., network monitor, analyzes the geo-location-based server assessment of the origin server(s). In some embodiments, this is where the assessment criteria 320 (see Fig. 3) and/or analysis criteria 220 (see Figs. 2) is used.

In the action 410D, the server determines to block or allow connection, more specifically determines to block or allow network communication 202, 302 to proceed to the destination device 116, as can be performed using the block or allow connection module 144 and/or network governance module 146 performing network connectivity 148 tasks and functions. This could be controlled, for example, through allowance or denial of packet forwarding on the building management network 106 network.

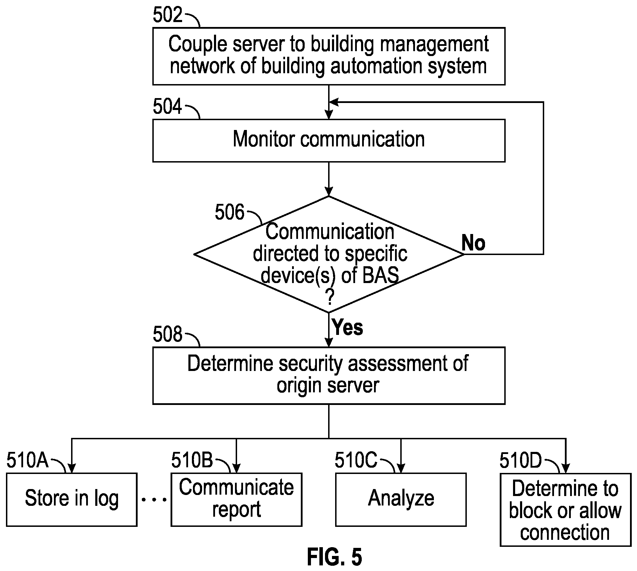

Fig. 5 illustrates a flow diagram of some embodiments of a method to provide network security specific to equipment of a building automation system and server assessment of network communication directed to such equipment.

In an action 502 the server is coupled to the building management network of the building automation system. This is similar to the action 402 of Fig. 4. Referencing Fig. 1, this could be done through a communication module 126. It is understood the server 102 may also be coupled to an external network.

In an action 504, the server monitors communication. This is similar to the action 404 of Fig. 4. For example, the server may monitor network communication and be looking for communication origins and destinations, e.g., IP addresses.

In a determination action 506, it is determined whether a communication, being monitored is directed to a specific device(s) of the BAS. This is similar to the action 406 of Fig. 4. This may be part of how the network monitor provides network security specific to equipment of a building automation system. If the determination is no, flow branches back to the action 502, to continue monitoring communication. If the determination is yes, flow proceeds to the action 508, in which the server determines a security assessment of the origin server. This may be part of how the network monitor provides network security.

One or more actions 510A, 510B, 510C, 510D may then be performed, in parallel or series, etc., based on or in response to, or as part of, the geo-location-based server assessment. These actions may be similar to the actions 410A, 410B, 410C, 410D of Fig. 4. Further actions in keeping with the teachings herein are readily devised.

In the action 510A, result(s) of determining geo-location-based server assessment of the origin server are stored in a log, for example the assessment log 140 (see Fig. 1), or perhaps other storage in memory 124 or database 128, which may be local or remote.

In the action 510B the report is communicated. For example, the server could form a report, with results of geo-location-based server assessment of origin server(s), which may include an alert, statistics, report of specific incident(s), etc.

In the action 510C, the present server, e.g., network monitor, analyzes the geo-location-based server assessment of the origin server(s). For example, this is where the assessment criteria 320 (see Fig. 3) and/or analysis criteria 220 (see Figs. 2) could be used.

In the action 510D, the server determines to block or allow connection, more specifically determines to block or allow network communication 202, 302 to proceed to the destination device 116, as can be performed using the block or allow connection module 144 and/or network governance module 146 performing network connectivity 148. This could be controlled, for example, through allowance or denial of packet forwarding on the building management network 106 network.

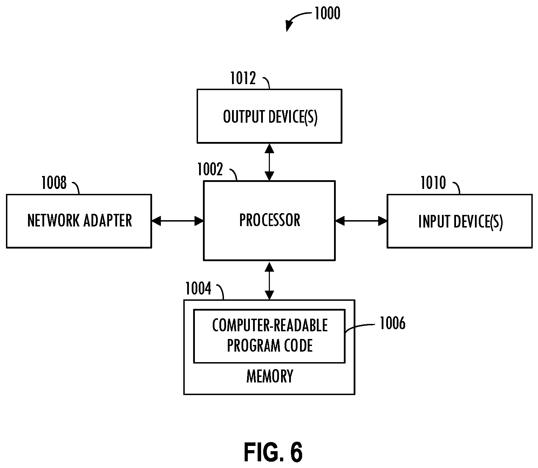

Fig. 6 illustrates the control circuitry 1000, which may be an apparatus, according to some examples of the present disclosure. In some examples, the control circuitry 1000 includes some or all of the server 102, or is part of the server 102, and may include or be part of some or any of the devices 116, 118, 120 and/or servers 110, 112, 114, which may further be or include devices, or any other similar apparatus as described by the present disclosure. In some examples multiple components include control circuitry. For example, the server 102 may comprise control circuitry 1000, the building automation system 104 may comprise separate control circuitry 1000, the devices 116, 118, 120 and servers 110, 112, 114, various networks including the external network 108 and the building management network 106, may also include its own control circuitry. Indeed, in some examples, the control circuitry 1000 may include one or more of each of a number of components such as, for example, a processor 1002 connected to a memory 1004. The processor is generally any piece of computer hardware capable of processing information such as, for example, data, computer programs and/or other suitable electronic information. The processor includes one or more electronic circuits some of which may be packaged as an integrated circuit or multiple interconnected integrated circuits (an integrated circuit at times more commonly referred to as a "chip"). The processor 1002 can be a number of processors, a multi-core processor or some other type of processor, depending on the particular example.

In some embodiments, the processor 1002 can be configured to execute computer programs such as computer-readable program code 1006, which may be stored onboard the processor or otherwise stored in the memory 1004. In some examples, the processor may be embodied as, or otherwise include, one or more ASICs, FPGAs or the like. Thus, although the processor may be capable of executing a computer program to perform one or more functions, the processor of various examples may be capable of performing one or more functions without the aid of a computer program.

The memory 1004 is generally any piece of computer hardware capable of storing information such as, for example, data, computer-readable program code 1006 or other computer programs, and/or other suitable information either on a temporary basis and/or a permanent basis. The memory may include volatile memory such as random access memory (RAM), and/or non-volatile memory such as a hard drive, flash memory or the like. In various instances, the memory may be referred to as a computer-readable storage medium, which is a non-transitory device capable of storing information. In some examples, then, the computer-readable storage medium is non-transitory and has computer-readable program code stored therein that, in response to execution by the processor 1002, causes the control circuitry 1000 to perform various operations as described herein, some of which may in turn cause the climate control system to perform various operations.

In addition to the memory 1004, the processor 1002 may also be connected to one or more peripherals such as a network adapter 1008, e.g., for interfacing with a communication bus as described above, one or more input/output (I/O) devices (e.g., input device(s) 1010, output device(s) 1012) or the like. The network adapter is a hardware component configured to connect the control circuitry 1000 to a computer network to enable the control circuitry to transmit and/or receive information via the computer network. The I/O devices may include one or more input devices capable of receiving data or instructions for the control circuitry, and/or one or more output devices capable of providing an output from the control circuitry. Examples of suitable input devices include a keyboard, keypad or the like, and examples of suitable output devices include a display device such as a one or more light-emitting diodes (LEDs), a LED display, a liquid crystal display (LCD), or the like.

The following clauses are statements of embodiments as may be applicable in various combinations.

Clause 1. A network monitor to provide network security specific to equipment of a building automation system (BAS) and server assessment of network communication directed thereto, comprising:
a server configured to couple to a building management network of the building automation system;
the server configured to monitor communication that is on the building management network and determine whether such communication is directed to specific devices of the building automation system; and
the server configured to determine and perform at least one of store or communicate, for each of a plurality of incoming network traffic communications that is determined directed to one or more specific devices of the building automation system, a geo-location-based assessment of a server that originated said each of a plurality of incoming network traffic communications directed to the one or more specific devices of the building automation system.

Clause 2. The network monitor of clause 1, wherein the geo-location-based assessment of the server comprises:
determination of an origin server of the incoming communication and a corresponding geo-location-based characterization of the origin server.

Clause 3. The network monitor of clause 1, wherein the geo-location-based assessment of the server comprises:
a determination of geo-location of an origin server of said each of a plurality of incoming network traffic communications; and
a determination of geo-location proximity of the origin server to the one or more specific devices of the building automation system.

Clause 4. The network monitor of clause 1, wherein the geo-location-based assessment of the server comprises:
comparison of geo-location proximity an origin server of said each of a plurality of incoming network traffic communications and at least one approved geo-location proximity range relative to the one or more specific devices of the building automation system.

Clause 5. The network monitor of clause 1, wherein the geo-location-based assessment of the server comprises:
comparison of geo-location of an origin server of the incoming communication and approved geo-location ranges of service providers for the building automation system.

Clause 6. The network monitor of clause 1, wherein the geo-location-based assessment of the server comprises:
comparison of geo-location of an origin server of the incoming communication and one or more unapproved geo-location ranges for origins of communication to the building automation system.

Clause 7. The network monitor of clause 1, further comprising:
the server configured to determine, for each of the plurality of incoming network traffic communications that is determined directed to the one or more specific devices of the building automation system, whether to block or allow connection based on the geo-location-based assessment.

Clause 8. A network monitor to provide network security specific to equipment of a building automation system (BAS) and server assessment of network communication directed thereto, comprising:
a server configured to couple to a building management network of the building automation system;
the server configured to monitor communication that is on the building management network and determine whether such communication is directed to specific devices of the building automation system; and
the server configured to determine and perform at least one of store or communicate, for each of a plurality of incoming network traffic communications that is determined directed to one or more specific devices of the building automation system, a security assessment of a server that originated each of a plurality of incoming network traffic communications directed to the one or more specific devices of the building automation system.

Clause 9. The network monitor of clause 8, wherein the security assessment of the server comprises:
an assessment relative to external server anomalies.

Clause 10. The network monitor of clause 8, wherein the security assessment of the server comprises:
an assessment relative to whitelist or blacklist of server IP addresses.

Clause 11. The network monitor of clause 8, wherein the security assessment of the server comprises:
an assessment relative to server signature or certificate-based verification.

Clause 12. The network monitor of clause 8, wherein the security assessment of the server comprises:
an assessment relative to identified servers that respond with malicious traffic.

Clause 13. The network monitor of clause 8, further comprising:
the server configured to perform network governance of the one or more specific devices of the building automation system, the network governance comprising authenticating network access only of authorized devices to operate and communicate in the network.

Clause 14. The network monitor of clause 8, further comprising:
the server configured to perform network governance of the one or more specific devices of the building automation system, the network governance comprising governing and regulating network communication to specific ports and protocols on authorized devices.

Clause 15. The network monitor of clause 8, further comprising:
the server configured to perform network governance of the one or more specific devices of the building automation system, the network governance comprising blocking access to the building management network by denying communication between an unauthorized device and the building management network.

Clause 16. The network monitor of clause 8, further comprising:
the server configured to perform network governance of the one or more specific devices of the building automation system, the network governance comprising monitoring and controlling connectivity of devices and networks of the building automation system with external networks.

Clause 17. The network monitor of clause 8, further comprising:
the server configured to perform network governance of the one or more specific devices of the building automation system, the network governance comprising providing real-time analysis of security alerts generated by devices and networks of the building automation system to contain and remediate security threats.

Clause 18. A processor-based method to provide network security specific to equipment of a building automation system (BAS) and server assessment of network communication directed thereto, comprising:
coupling a server to a building management network of the building automation system;
monitoring, by the server, communication that is on the building management network;
determining, by the server, whether such communication is directed to specific devices of the building automation system; and
determining and performing at least one of store or communicate, for each of a plurality of incoming network traffic communications that is determined directed to one or more specific devices of the building automation system, a security-centric assessment of a server that originated said each of a plurality of incoming network traffic communications directed to the one or more specific devices of the building automation system.

Clause 19. The processor-based method of clause 18, wherein:
the determining and performing at least one of store or communicate comprises:
determining and storing a geo-location-based server assessment of the server that originated said each of a plurality of incoming network traffic communications directed to the one or more specific devices of the building automation system; and
determining whether to block or allow connection based on the stored geo-location-based server assessment.

Clause 20. The processor-based method of clause 18, wherein:
the determining and performing at least one of store or communicate comprises:
performing the security assessment of the server at least one of:
assessment relative to external server anomalies;
assessment relative to whitelist or blacklist of server IP addresses;
assessment relative to server signature or certificate-based verification; or
assessment relative to identified servers that respond with malicious traffic; and
determining whether to block or allow connection based on the stored security assessment of the server that originated said each of a plurality of incoming network traffic communications directed to the one or more specific devices of the building automation system.

Detailed illustrative embodiments are disclosed herein. However, specific functional details disclosed herein are merely representative for purposes of describing embodiments. Embodiments may, however, be embodied in many alternate forms and should not be construed as limited to only the embodiments set forth herein.

It should be understood that although the terms first, second, etc. may be used herein to describe various steps or calculations, these steps or calculations should not be limited by these terms. These terms are only used to distinguish one step or calculation from another. For example, a first calculation could be termed a second calculation, and, similarly, a second step could be termed a first step, without departing from the scope of this disclosure. As used herein, the term "and/or" and the "/" symbol includes any and all combinations of one or more of the associated listed items.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

With the above embodiments in mind, it should be understood that the embodiments might employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing. Any of the operations described herein that form part of the embodiments are useful machine operations. The embodiments also relate to a device or an apparatus for performing these operations. The apparatus can be specially constructed for the required purpose, or the apparatus can be a general-purpose computer selectively activated or configured by a computer program stored in the computer. In particular, various general-purpose machines can be used with computer programs written in accordance with the teachings herein, or it may be more convenient to construct a more specialized apparatus to perform the required operations.

A module, an application, a layer, an agent or other method-operable entity could be implemented as hardware, firmware, or a processor executing software, or combinations thereof. It should be appreciated that, where a software-based embodiment is disclosed herein, the software can be embodied in a physical machine such as a controller. For example, a controller could include a first module and a second module. A controller could be configured to perform various actions, e.g., of a method, an application, a layer or an agent.

The embodiments can also be embodied as computer readable code on a tangible non-transitory computer readable medium. The computer readable medium is any data storage device that can store data, which can be thereafter read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer system so that the computer readable code is stored and executed in a distributed fashion. Embodiments described herein may be practiced with various computer system configurations including hand-held devices, tablets, microprocessor systems, microprocessor-based or programmable consumer electronics, minicomputers, mainframe computers and the like. The embodiments can also be practiced in distributed computing environments where tasks are performed by remote processing devices that are linked through a wire-based or wireless network.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

In various embodiments, one or more portions of the methods and mechanisms described herein may form part of a cloud-computing environment. In such embodiments, resources may be provided over the Internet as services according to one or more various models. Such models may include Infrastructure as a Service (IaaS), Platform as a Service (PaaS), and Software as a Service (SaaS). In IaaS, computer infrastructure is delivered as a service. In such a case, the computing equipment is generally owned and operated by the service provider. In the PaaS model, software tools and underlying equipment used by developers to develop software solutions may be provided as a service and hosted by the service provider. SaaS typically includes a service provider licensing software as a service on demand. The service provider may host the software, or may deploy the software to a customer for a given period of time. Numerous combinations of the above models are possible and are contemplated.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. 112, sixth paragraph, for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the invention is not to be limited to the details given herein, but may be modified within the scope and equivalents of the appended claims.

The disclosure extends to the following numbered Aspects.
Aspect 1. A network monitor to provide network security specific to equipment of a building automation system (BAS) and server assessment of network communication directed thereto, comprising:
   a server configured to couple to a building management network of the building automation system;
   the server configured to monitor communication that is on the building management network and determine whether such communication is directed to specific devices of the building automation system; and
   the server configured to determine and perform at least one of store or communicate, for each of a plurality of incoming network traffic communications that is determined directed to one or more specific devices of the building automation system, a geo-location-based assessment of a server that originated said each of the plurality of incoming network traffic communications directed to the one or more specific devices of the building automation system.
Aspect 2. The network monitor of Aspect 1, wherein the geo-location-based assessment of the server comprises:
   determination of an origin server of the incoming communication and a corresponding geo-location-based characterization of the origin server.
Aspect 3. The network monitor of any one of the preceding Aspects, wherein the geo-location-based assessment of the server comprises:
   a determination of geo-location of an origin server of said each of a plurality of incoming network traffic communications; and
   a determination of geo-location proximity of the origin server to the one or more specific devices of the building automation system.
Aspect 4. The network monitor of any one of the preceding Aspects, wherein the geo-location-based assessment of the server comprises:
   comparison of geo-location proximity an origin server of said each of a plurality of incoming network traffic communications and at least one approved geo-location proximity range relative to the one or more specific devices of the building automation system.
Aspect 5. The network monitor of any one of the preceding Aspects, wherein the geo-location-based assessment of the server comprises:
   comparison of geo-location of an origin server of the incoming communication and approved geo-location ranges of service providers for the building automation system.
Aspect 6. The network monitor of any one of the preceding Aspects, wherein the geo-location-based assessment of the server comprises:
   comparison of geo-location of an origin server of the incoming communication and one or more unapproved geo-location ranges for origins of communication to the building automation system.
Aspect 7. The network monitor of any one of the preceding Aspects, further comprising:
   the server configured to determine, for each of the plurality of incoming network traffic communications that is determined directed to the one or more specific devices of the building automation system, whether to block or allow connection based on the geo-location-based assessment.
Aspect 8. A network monitor to provide network security specific to equipment of a building automation system (BAS) and server assessment of network communication directed thereto, comprising:
   a server configured to couple to a building management network of the building automation system;
   the server configured to monitor communication that is on the building management network and determine whether such communication is directed to specific devices of the building automation system; and
   the server configured to determine and perform at least one of store or communicate, for each of a plurality of incoming network traffic communications that is determined directed to one or more specific devices of the building automation system, a security assessment of a server that originated said each of the plurality of incoming network traffic communications directed to the one or more specific devices of the building automation system.
Aspect 9. The network monitor of Aspect 8, wherein the security assessment of the server comprises:
   an assessment relative to external server anomalies.
Aspect 10. The network monitor of any one of Aspects 8-9, wherein the security assessment of the server comprises:
   an assessment relative to whitelist or blacklist of server IP addresses.
Aspect 11. The network monitor of any one of Aspects 8-10, wherein the security assessment of the server comprises:
   an assessment relative to server signature or certificate-based verification.
Aspect 12. The network monitor of any one of Aspects 8-11, wherein the security assessment of the server comprises:
   an assessment relative to identified servers that respond with malicious traffic.
Aspect 13. The network monitor of any one of Aspects 8-12, further comprising:
   the server configured to perform network governance of the one or more specific devices of the building automation system, the network governance comprising authenticating network access only of authorized devices to operate and communicate in the network.
Aspect 14. The network monitor of any one of Aspects 8-13, further comprising:
   the server configured to perform network governance of the one or more specific devices of the building automation system, the network governance comprising governing and regulating network communication to specific ports and protocols on authorized devices.
Aspect 15. The network monitor of any one of Aspects 8-14, further comprising:
   the server configured to perform network governance of the one or more specific devices of the building automation system, the network governance comprising blocking access to the building management network by denying communication between an unauthorized device and the building management network.
Aspect 16. The network monitor of any one of Aspects 8-15, further comprising:
   the server configured to perform network governance of the one or more specific devices of the building automation system, the network governance comprising monitoring and controlling connectivity of devices and networks of the building automation system with external networks.
Aspect 17. The network monitor of any one of Aspects 8-16, further comprising:
   the server configured to perform network governance of the one or more specific devices of the building automation system, the network governance comprising providing real-time analysis of security alerts generated by devices and networks of the building automation system to contain and remediate security threats.
Aspect 18. The network monitor of any one of Aspects 8-17, wherein the security assessment of the server that originated said each of the plurality of incoming network traffic communications directed to the one or more specific devices of the building automation system comprises a geo-location-based assessment of the server that originated said each of the plurality of incoming network traffic communications directed to the one or more specific devices of the building automation system.
Aspect 19. The network monitor of any one of the Aspects 8-18, wherein the network monitor is also in accordance with any one of Aspects 1-7.
Aspect 20. A processor-based method to provide network security specific to equipment of a building automation system (BAS) and server assessment of network communication directed thereto, comprising:
   coupling a server to a building management network of the building automation system;
   monitoring, by the server, communication that is on the building management network;
   determining, by the server, whether such communication is directed to specific devices of the building automation system; and
   determining and performing at least one of store or communicate, for each of a plurality of incoming network traffic communications that is determined directed to one or more specific devices of the building automation system, a security-centric assessment of a server that originated said each of a plurality of incoming network traffic communications directed to the one or more specific devices of the building automation system.
Aspect 21. The processor-based method of Aspect 20, wherein:
   the determining and performing at least one of store or communicate comprises:
   determining and storing a geo-location-based server assessment of the server that originated said each of a plurality of incoming network traffic communications directed to the one or more specific devices of the building automation system; and
   determining whether to block or allow connection based on the stored geo-location-based server assessment.
Aspect 22. The processor-based method of Aspect 20 or 21, wherein:
   the determining and performing at least one of store or communicate comprises:
   performing the security assessment of the server at least one of:
      assessment relative to external server anomalies;
      assessment relative to whitelist or blacklist of server IP addresses;
      assessment relative to server signature or certificate-based verification; or
      assessment relative to identified servers that respond with malicious traffic; and
   determining whether to block or allow connection based on the stored security assessment of the server that originated said each of a plurality of incoming network traffic communications directed to the one or more specific devices of the building automation system.

## Claims

1. A network monitor to provide network security specific to equipment of a building automation system (BAS) and server assessment of network communication directed thereto, comprising:
a server configured to couple to a building management network of the building automation system;
the server configured to monitor communication that is on the building management network and determine whether such communication is directed to specific devices of the building automation system; and
the server configured to determine and perform at least one of store or communicate, for each of a plurality of incoming network traffic communications that is determined directed to one or more specific devices of the building automation system, a security assessment of a server that originated said each of the plurality of incoming network traffic communications directed to the one or more specific devices of the building automation system.

2. The network monitor of claim 1, wherein the security assessment of the server comprises:
an assessment relative to external server anomalies.

3. The network monitor of claim 1 or 2, wherein the security assessment of the server comprises:
an assessment relative to whitelist or blacklist of server IP addresses.

4. The network monitor of any one of the preceding claims, wherein the security assessment of the server comprises:
an assessment relative to server signature or certificate-based verification.

5. The network monitor of any one of the preceding claims, wherein the security assessment of the server comprises:
an assessment relative to identified servers that respond with malicious traffic.

6. The network monitor of any one of the preceding claims, further comprising:
the server configured to perform network governance of the one or more specific devices of the building automation system, the network governance comprising authenticating network access only of authorized devices to operate and communicate in the network.

7. The network monitor of any one of the preceding claims, further comprising:
the server configured to perform network governance of the one or more specific devices of the building automation system, the network governance comprising governing and regulating network communication to specific ports and protocols on authorized devices.

8. The network monitor of any one of the preceding claims, further comprising:
the server configured to perform network governance of the one or more specific devices of the building automation system, the network governance comprising blocking access to the building management network by denying communication between an unauthorized device and the building management network.

9. The network monitor of any one of the preceding claims, further comprising:
the server configured to perform network governance of the one or more specific devices of the building automation system, the network governance comprising monitoring and controlling connectivity of devices and networks of the building automation system with external networks.

10. The network monitor of any one of the preceding claims, further comprising:
the server configured to perform network governance of the one or more specific devices of the building automation system, the network governance comprising providing real-time analysis of security alerts generated by devices and networks of the building automation system to contain and remediate security threats.

11. The network monitor of any one of the preceding claims, wherein the security assessment of the server that originated said each of the plurality of incoming network traffic communications directed to the one or more specific devices of the building automation system comprises a geo-location-based assessment of the server that originated said each of the plurality of incoming network traffic communications directed to the one or more specific devices of the building automation system.

12. A processor-based method to provide network security specific to equipment of a building automation system (BAS) and server assessment of network communication directed thereto, comprising:
coupling a server to a building management network of the building automation system;
monitoring, by the server, communication that is on the building management network;
determining, by the server, whether such communication is directed to specific devices of the building automation system; and
determining and performing at least one of store or communicate, for each of a plurality of incoming network traffic communications that is determined directed to one or more specific devices of the building automation system, a security-centric assessment of a server that originated said each of a plurality of incoming network traffic communications directed to the one or more specific devices of the building automation system.

13. The processor-based method of claim 12, wherein:
the determining and performing at least one of store or communicate comprises:
determining and storing a geo-location-based server assessment of the server that originated said each of a plurality of incoming network traffic communications directed to the one or more specific devices of the building automation system; and
determining whether to block or allow connection based on the stored geo-location-based server assessment.

14. The processor-based method of claim 12 or 13, wherein:
the determining and performing at least one of store or communicate comprises:
performing the security assessment of the server at least one of:
assessment relative to external server anomalies;
assessment relative to whitelist or blacklist of server IP addresses;
assessment relative to server signature or certificate-based verification; or
assessment relative to identified servers that respond with malicious traffic; and
determining whether to block or allow connection based on the stored security assessment of the server that originated said each of a plurality of incoming network traffic communications directed to the one or more specific devices of the building automation system.
